# EUROPÄISCHE PATENTSCHRIFT

(11) **EP 3 501 764 B1**
(45) Veröffentlichungstag und Bekanntmachung des Hinweises auf die Patenterteilung: **02.08.2023**
(21) Anmeldenummer: 18199530.9
(22) Anmeldetag: 10.10.2018
(51) Int. Cl.: B26D 3/16, B26D 7/00, B24D 5/12, B25F 5/00, B24B 23/02

(54) **VERWENDUNG EINES TRENNSCHNEIDERS MIT TIEFENANSCHLAG**
USE OF AN ANGLE GRINDER WITH DEPTH STOP
UTILISATION D'UNE TRONÇONNEUSE AVEC BUTÉE DE PROFONDEUR

(30) Priorität: 14.12.2017 DE 202017107617 U
(43) Veröffentlichungstag der Anmeldung: 26.06.2019
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- EP-A1- 3 053 684
- WO-A1-2011/014914
- DE-A1- 3 600 809
- DE-B3-102014 115 768
- US-A- 5 788 561

## Beschreibung

Die Erfindung betrifft die Verwendung einer Anordnung mit einem Tiefenanschlag für einen Trennschneider, welcher Trennschneider mit einer drehangetriebenen, auswechselbaren Trennscheibe ausgestattet ist (siehe Dokument EP3053684 A1, das dem Oberbegriff von Anspruch 1 zugrunde liegt).

Aus der WO 2011/014914 A1 und der DE 36 00 809 A1, ist jeweils ein gattungsgemäßer Tiefenanschlag bekannt.

Aus der DE 10 2014 115 768 B3 ist ein zweiteiliger Tiefenanschlag für ein Bohr-, Fräs- oder Senkwerkzeug bekannt, der innere und äußere, zueinander drehbewegliche Teile aufweist.

Aus der US 5 788 561 A ist ein Apparat bekannt, der zum Abschleifen von Böden oder zum Einbringen von Schnitten in Böden dient. Ein daran vorhandener Tiefenanschlag weist einen zweiteiligen Anschlagring mit äußerem, austauschbarem Kontaktelement auf.

Aus der Praxis ist es bekannt, dass beim Anschluss von Rohrleitungen an eine bereits bestehende Rohrleitung nachträglich Öffnungen in die bereits bestehende Rohrleitung eingebracht werden müssen. Diese Problematik tritt regelmäßig beim Erschlie-ßen neuer Baugrundstücke auf.

Wenn die bereits vorhandene Rohrleitung aus einem mineralischen Werkstoff besteht, ist in vielen Fällen eine Situation anzutreffen, dass diese vorhandene Rohrleitung mittels eines so genannten Liners bzw. Inliners saniert worden ist. Für den Anschluss der neuen Rohrleitung ist in diesem Fall zu beachten, dass eine Öffnung in die mineralische Rohrleitung eingebracht wird und dabei der Liner nicht beschädigt wird. Die Schnitttiefe zu bestimmen, ist in diesen Fällen dem Geschick des ausführenden Personals überlassen. Falls versehentlich der Liner beschädigt wird, kann dies aufwendige Reparaturmaßnahmen nach sich ziehen.

Der Erfindung liegt die Aufgabe zugrunde, eine Anordnung anzugeben, mit deren Hilfe eine Öffnung in der mineralischen Rohrleitung erzeugt werden kann, ohne einen in dieser Rohrleitung befindlichen Liner zu schädigen.

Diese Aufgabe wird durch die Verwendung einer Anordnung nach Anspruch 1 gelöst. Vorteilhafte Ausgestaltungen sind in den Unteransprüchen beschrieben.

Die Erfindung schlägt mit anderen Worten vor, einen Tiefenanschlag zu verwenden, der zusammen mit der Trennscheibe am Trennschneider montiert wird. Zu diesem Zweck weist der Tiefenanschlag eine mittlere Aussparung auf, die als Achsaufnahme dient, durch welche sich also die Drehachse des Trennschneiders erstrecken kann. Somit kann der Tiefenanschlag wie eine Trennscheibe an den Trennschneider montiert werden. Weiterhin weist der Tiefenanschlag einen Anschlagring auf, der kreisförmig um die Aussparung herum verläuft. Dieser Anschlagring wird in seinem vorbestimmten Abstand von der Aussparung mittels eines Abstandhalters gehalten.

Eine Anordnung, um vorschlagsgemäß Kerbschnitte in einen Rohrkörper einzubringen, umfasst einerseits einen an sich bekannten Trennschneider, andererseits eine auf dem Trennschneider auswechselbar gehaltene Trennscheibe, und schließlich den vorschlagsgemäßen Tiefenanschlag, wobei die Durchmesser des Tiefenanschlags und der Trennscheibe derart aufeinander abgestimmt sind, dass der Durchmesser der Trennscheibe größer ist als der Außendurchmesser des Tiefenanschlags.

Die im Rahmen des vorliegenden Vorschlags als Trennschneider bezeichneten Werkzeuge werden in der Praxis auch als Trennjäger, Trennschleifer, Winkelschleifer o. dgl. bezeichnet. Es handelt sich um handgehaltene Werkzeuge mit üblicherweise elektrischem Antrieb.

Der vorschlagsgemäß verwendete Tiefenanschlag kann in unterschiedlichen Durchmessern bereitgestellt werden. Jedenfalls wird er für die durchzuführenden Arbeiten zusammen mit einer Trennscheibe verwendet, deren Durchmesser so viel größer ist als der Durchmesser des Tiefenanschlags, dass aus dem sich daraus ergebenden Überstand der Trennscheibe eine Schnitttiefe resultiert, die mit dem Trennschneider erzeugt werden kann, welche geringer ist als die Wandstärke des keramischen Rohrkörpers. In praktischen Versuchen hat sich herausgestellt, dass es ausreichend ist, Kerbschnitte in den mineralischen Rohrkörper einzubringen, um anschließend mit einem oder mehreren gezielten Hammerschlägen einen vollständigen Bruch herbeizuführen, so dass dementsprechend das durch die Kerbschnitte umrandete Element der Rohrwandung aus dem Rohrkörper entfernt werden kann. Dadurch, dass hierzu ein Kerbschnitt ausreicht, resultieren mehrere Vorteile: Einerseits kann zuverlässig sichergestellt werden, dass eine Schnitttiefe für die durchzuführenden Arbeiten ausreichend ist, die eine ungewollte Verletzung des Liners zuverlässig ausschließt. Weiterhin ist es nicht erforderlich, in exakter Anpassung an die jeweilige Wandstärke der vorgefundenen Rohrleitung den Durchmesser der Trennscheibe und des Tiefenanschlags millimetergenau an die Wandstärke der Rohrleitung anzupassen. Dementsprechend kann eine Vielzahl unterschiedlicher Rohrtypen, die in der Praxis vorgefunden werden, mit sehr wenigen unterschiedlichen Trennscheiben und Tiefenanschlägen bearbeitet werden, so dass in der Praxis beispielsweise zwei oder drei unterschiedliche Durchmesser von Trennscheiben ausreichen, die mit stets demselben Tiefenanschlag kombiniert werden, ohne dass ggf. zwei oder drei unterschiedlich bemessene Tiefenanschläge ausreichen, um stets einerseits die Schonung des Liners sicherzustellen und andererseits eine ausreichend tiefe Kerbe erzeugen zu können, um anschließend durch die erwähnten Hammerschläge die endgültige Herauslösung des gewünschten Stückes aus der Rohrwandung bewirken zu können.

Dadurch, dass der Tiefenanschlag einen Anschlagring aufweist und sich zusammen mit der Trennscheibe dreht, ist eine hervorragende Sicherheit gewährleistet, den Liner nicht zu verletzen. Im Gegensatz zu außen an dem Trennschneider abgebrachten Anschlägen, die ggf. verstellbar sind, kann keine versehentliche Verstellung des Tiefenanschlags erfolgen, z. B. durch im Betrieb auftretende Vibrationen oder grobe Stöße bei unachtsamer Handhabung des Trennschneiders. Ein Verschleiß der Trennscheibe führt zudem zur Verringerung von deren Durchmesser, so dass dementsprechend der Überstand über den Tiefenanschlag hinaus geringer wird und somit die Tiefe des erzeugten Kerbschnitts geringer wird, so dass versehentliche Verletzungen des Liners zuverlässig ausgeschlossen sind.

Der Anschlagring stellt durch seine ringförmige Kontur zudem sicher, dass er, wenn er auf die Oberfläche des Rohrkörpers auftritt, die sichere Handhabung des Trennschneiders nicht gefährdet. Aufgrund der ringförmigen Außenkontur ist nämlich sichergestellt, dass anders als bei einer strahlenförmigen oder mehreckigen Außenkontur der Tiefenanschlag nicht an der Außenseite des Rohrkörpers verhaken kann, was die Weiterführung des Trennschneiders und somit die Erzeugung des gewünschten Kerbschnittes behindern würde.

Vorteilhaft kann vorgesehen sein, dass der Abstandhalter des Tiefenanschlags als Scheibe ausgestaltet ist. So ist im Vergleich zur Ausgestaltung mit mehreren separaten Speichen eine besonders robuste und betriebssichere Ausgestaltung des Tiefenanschlags gewährleistet. Zudem werden unerwünschte Öffnungen vermieden, in denen Gegenstände hängen bleiben könnten, die sich später unkontrolliert von dem Tiefenanschlag lösen und eine Gefährdung darstellen können.

Vorteilhaft kann diese erwähnte Scheibe eine zentrische Bohrung aufweisen, welche die Achsaufnahme des Tiefenanschlags bildet. Im Vergleich zu einer zentrischen Öffnung, die ggf. Sternförmig ausgestaltet ist, bewirkt eine Bohrung einen möglichst großflächigen Kontakt des Abstandhalters mit einem sich in die Bohrung erstreckenden Zentrierelement, sei es die Achse des Trennschneiders selbst oder sei es ein separates Zentrierelement. So wird eine präzise Zentrierung und eine möglichst robuste Ausgestaltung des Tiefenanschlags unterstützt.

Vorteilhaft kann der Anschlagring des Tiefenanschlags eine Breite von wenigstens 3 mm aufweisen. Hierdurch wird vermieden, dass mittels des Tiefenanschlags versehentlich ein zweiter Einschnitt neben dem gewünschten Kerbschnitt in die Wand der Rohrleitung eingebracht wird. Insbesondere kann die Breite des Anschlagrings deutlich größer als 3 mm sein, beispielsweise 5 bis 10 mm breit sein, um die unerwünschte Schneidwirkung des Anschlagrings zuverlässig auszuschließen.

In einer Ausgestaltung kann der Anschlagring aus Metall bestehen und eine gehärtete Oberfläche aufweisen, um eine lange Lebensdauer bzw. Nutzungsdauer des Tiefenanschlags zu gewährleisten.

In einer anderen Ausgestaltung kann der Anschlagring eine gleitfreudige und reibungsarme Oberfläche aufweisen, beispielsweise kann vorgesehen sein, dass der Anschlagring komplett aus einem dementsprechend gleitfreudigen und reibungsarmen Kunststoff besteht, und ggf. kann der gesamte Tiefenanschlag aus einem solchen Kunststoff bestehen. Durch die reibungsarme Ausgestaltung der Oberfläche des Anschlagrings ist ein unerwünschter vorschneller Verschleiß des Anschlagrings vermieden und zudem eine optimale Schonung der Rohroberfläche gewährleistet.

Gegebenenfalls können die beiden vorgenannten Ausgestaltungen miteinander kombiniert sein, indem beispielsweise ein grundsätzlich aus Metall bestehender Tiefenanschlag eine gleitfreudige, reibungsarme Schicht auf der Oberfläche des Anschlagrings aufweist.

Es kann also vorgesehen sein, dass der Anschlagring zweiteilig ausgestaltet ist, wobei der radial innere Anteil, welcher an den Abstandhalter anschließt, als Tragelement bezeichnet ist und ein radial außen davon befindlicher Anteil des Anschlagrings als Kontaktelement bezeichnet ist, welches nämlich den Kontakt zu der Rohroberfläche haben wird, wenn die Trennscheibe ausreichend weit in die Rohrwandung eingedrungen ist.

Bei einem solch zweiteiligen Anschlagring kann vorteilhaft vorgesehen sein, dass das Tragelement sich radial nach außen erweitert, beispielsweise in Form eines geschlossen umlaufenden Wulstes, oder zumindest in Form von einigen Bereichen, in denen sich der Querschnitt des Tragelements radial nach außen erweitert. Somit wird eine Hinterschneidung geschaffen, und zusammenwirkend mit diesem Tragelement ist ein Kontaktelement vorgesehen, welches an dem Tragelement formschlüssig gehalten ist. Hierzu weist das Kontaktelement einen im Wesentlichen U-förmigen Querschnitt auf, der sich allerdings radial nach innen verjüngt, um den gewünschten, durch die Hinterschneidung ermöglichten, formschlüssigen Halt des Kontaktelements am Tragelement zu ermöglichen. Unabhängig von der äußeren Querschnittskontur des Kontaktelements kann vorgesehen sein, dass der sich radial nach innen verjüngender Querschnitt in Form eines Hohlraums bzw. einer Nut des Kontaktelements verwirklicht ist.

Bei einer solch zweiteiligen Ausgestaltung des Anschlagrings kann insbesondere vorteilhaft vorgesehen sein, dass das formschlüssig auf dem Tragelement gehaltene Kontaktelement mit Spiel auf dem Tragelement gehalten ist. Hierdurch wird eine Relativbewegung zwischen dem Anschlagring - bzw. seinem äußeren Kontaktelement - und der Drehachse des Trennschneiders ermöglicht. Auf diese Weise kann eine optimale Schonung des Rohrkörpers ermöglicht werden: aufgrund des erwähnten Spiels wird ein Freilauf zwischen dem Tragelement und dem Kontaktelement ermöglicht, so dass das Kontaktelement in seiner Drehbewegung durch die Anlage am Rohrkörper gebremst wird, ggf. bis zum Stillstand, während sich das Tragelement weiterhin gemeinsam mit der Trennscheibe drehen kann.

Anschließend kann der Trennschneider entlang der Nut weitergeführt werden, wobei der Kontakt zwischen dem Kontaktelement des Anschlagrings und der Rohroberfläche beibehalten wird, so dass das Kontaktelement auf der Rohroberfläche abläuft. Auf diese Weise wird eine besonders widerstandsarme Führung des Trennschneiders erzielt und die Einbringung des Schnittes in die Rohrwand erleichtert.

Bei der erwähnten formschlüssigen Halterung des Kontaktelements auf dem Tragelement des Anschlagrings kann vorteilhaft vorgesehen sein, dass das Kontaktelement auswechselbar auf dem Tragelement angeordnet ist. Beispielsweise kann das Tragelement aus Metall bestehen, während das Kontaktelement als ein aus Kunststoff bestehender Ring ausgestaltet ist, der auf das Tragelement formschlüssig aufgeclipst werden kann.

Die erwähnte zweiteilige Ausgestaltung des Anschlagrings stellt eine Variante dar, den Tiefenanschlag mit einem ersten, radial inneren und einem zweiten, radial äußeren Teil auszugestalten, die beide relativ zueinander drehbeweglich sind. Beispielsweise kann in der Mitte des Tiefenanschlags ein Kugellager oder ein ähnlicher Lagerring angeordnet sein, welcher gleichzeitig auch die Aussparung des Tiefenanschlags definiert, und an den Lagerring schließen radial nach außen der Abstandshalter und der Anschlagring an. Durch den Lagerring wird ermöglicht, dass sich der Abstandshalter und der Anschlag unabhängig von der Antriebsachse des Trennschneiders drehen können - oder eben auch bis zum Stillstand abgebremst werden können, wenn der Anschlagring auf der Rohrwandung aufsetzt.

Ausführungsbeispiele der vorschlagsgemäßen Tiefenanschläge werden anhand der rein schematischen Darstellungen nachfolgend näher erläutert. Dabei zeigt
- Fig. 1: eine Draufsicht auf ein erstes Ausführungsbeispiel eines Tiefenanschlags,
- Fig. 2: einen Schnitt entlang der Linie II-II in Fig. 1,
- Fig. 3: eine perspektivische Ansicht auf die Innenseite eines zweiten Ausführungsbeispiels eines Tiefenanschlags,
- Fig. 4: eine perspektivische Ansicht auf die Außenseite des Tiefenanschlags von Fig. 3,
- Fig. 5: eine Spannschraube eines Trennschneiders,
- Fig. 6: den Kopfbereich eines Trennschneiders,
- Fig. 7: eine Ansicht ähnlich Fig. 6, jedoch zusätzlich mit einer Trennscheibe,
- Fig. 8: die Ansicht ähnlich Fig. 7, mit dem zusätzlich lose aufgelegten Tiefenanschlag der Fig. 3 u. 4, und
- Fig. 9: eine fertig montierte Anordnung zur Erzeugung von Kerbschnitten.

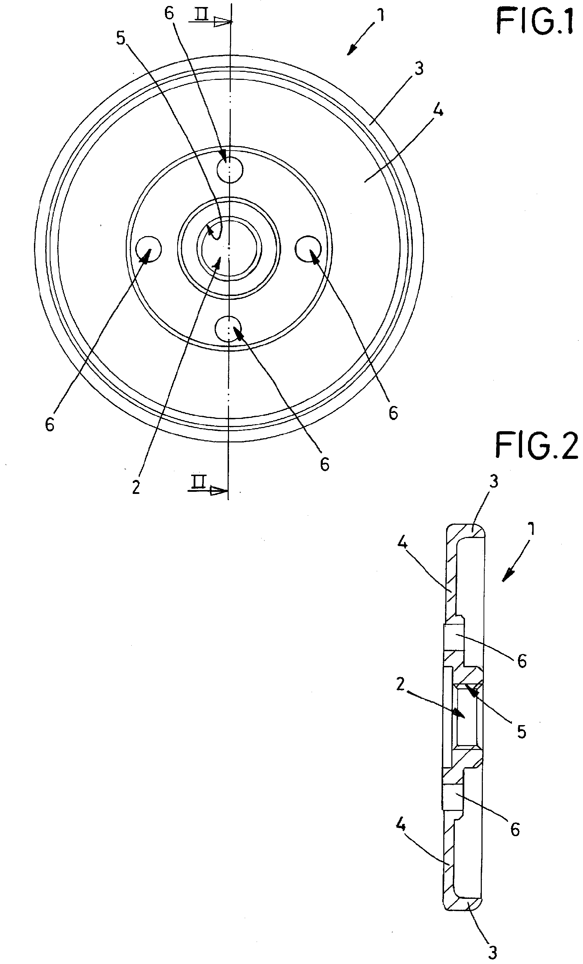

In Fig. 1 ist mit 1 ein Tiefenanschlag bezeichnet, der eine zentrale Aussparung 2 als Achsaufnahme für die Drehantriebsachse eines Trennschneiders aufweist. Im Abstand um die Aussparung 2 herum verläuft ein Anschlagring 3, der mittels eines Abstandhalters 4 im Abstand von der Aussparung 2 gehalten wird. Bei dem dargestellten Ausführungsbeispiel ist der gesamte Tiefenanschlag 1 als einteiliges Metallformstück hergestellt, wobei der Abstandhalter 4 als eine ringförmige Scheibe ausgestaltet ist.

Wie insbesondere auch aus Fig. 2 ersichtlich ist, ist der Bereich des Tiefenanschlags 1 um die Aussparung 2 herum als Spannschraube ausgestaltet, so dass mittels des Tiefenanschlags 1 eine Trennscheibe auf einem Trennschneider montiert werden kann. Hierzu verläuft um die Aussparung 2 herum ein Gewinde 5, mit welchem der Tiefenanschlag 1 auf die Antriebsachse eines Trennschneiders aufgeschraubt werden kann. Einstecköffnungen 6 in Form von Bohrungen dienen zum Ansetzen eines Spannschlüssels.

Das Ausführungsbeispiel der Fig. 1 und 2 weist einen Durchmesser von 85 mm auf und die umlaufende äußerste Oberfläche des Anschlagrings 3 weist eine Breite von 5 mm auf, mit der sie in Kontakt mit einem Rohrkörper geraten kann. An diese Breite von 5 mm schließen seitliche Fasen bzw. Verrundungen an, so dass der Anschlagring 3 insgesamt eine Breite von 8 bis 9 mm aufweist.

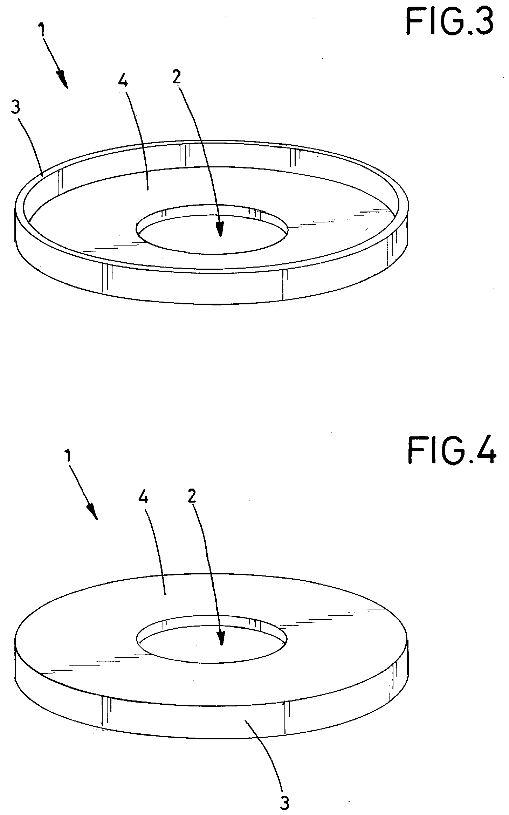

In den Fig. 3 und 4 ist ein zweites Ausführungsbeispiel eines Tiefenanschlags 1 dargestellt, welches eine geometrisch einfachere Ausgestaltung als der Tiefenanschlag 1 der Fig. 1 und 2 aufweist: Das Ausführungsbeispiel der Fig. 3 und 4 weist einen insgesamt U-förmigen Querschnitt auf und besteht aus einer Scheibe, die eine mittlere Bohrung als Aussparung 2 aufweist und ansonsten den Abstandhalter 4 bildet, und an die sich entlang ihrem äußeren Umfang der Anschlagring 3 anschließt.

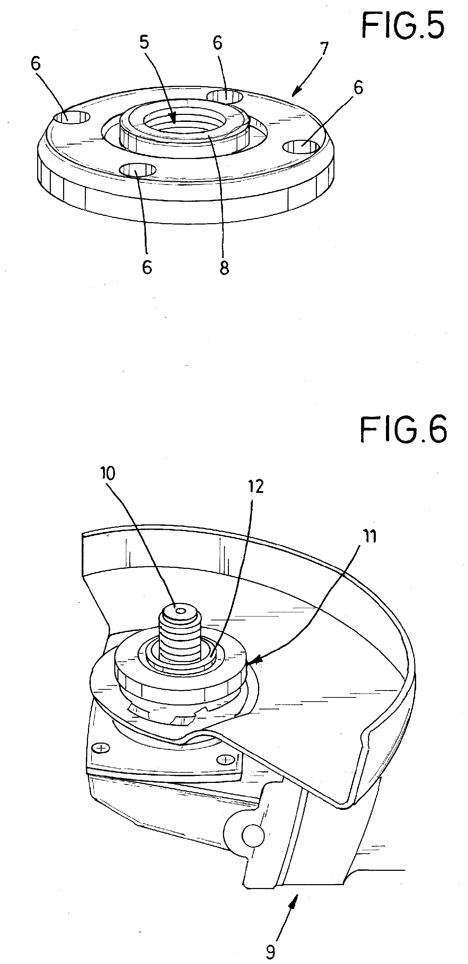

Fig. 5 zeigt eine Spannschraube 7, die zur Montage des Tiefenanschlags 1 der Fig. 3 und 4 verwendet werden kann. Es handelt sich dabei um eine handelsübliche Spannschraube 7, wie sie auch zur Befestigung von Trennscheiben an den Trennschneider genutzt wird. Wie der Tiefenanschlag 1 der Fig. 1 und 2 weist auch die Spannschraube 7 ein Gewinde 5 auf, welches die Festlegung auf einer Achse eines Trennschneiders ermöglicht, sowie Einstecköffnungen 6 für einen Spannschlüssel. Die Spannschraube 7 weist einen Bund 8 auf, der an die innere Aussparung von Trennscheiben angepasst ist, um diese auf der Drehachse des Trennschneiders zu zentrieren. Die Aussparung 2 des Tiefenanschlags 1 ist an den Durchmesser dieses Bundes 8 in der Weise angepasst, dass auch der Tiefenanschlag 1 mittels der Spannschraube 7 zentriert werden kann.

Fig. 6 zeigt den so genannten Kopfbereich eines Trennschneiders 9 mit einer motorisch angetriebenen Achse 10, die winklig zu einem elektrischen Antriebsmotor ausgerichtet ist, dessen Motorgehäuse sich nach rechts aus dem Bild der Fig. 6 hinaus erstreckt. Die Achse 10 ist mit einem Außengewinde versehen, welches beispielsweise mit dem Gewinde 5 des Tiefenanschlags 1 der Fig. 1 und 2 zusammenwirkt, mit dem aber auch die Spannschraube 7 zusammenwirkt. Auf der Achse 10 ist ein Zentrierteller 11 montiert, der einen Zentrierkragen 12 aufweist.

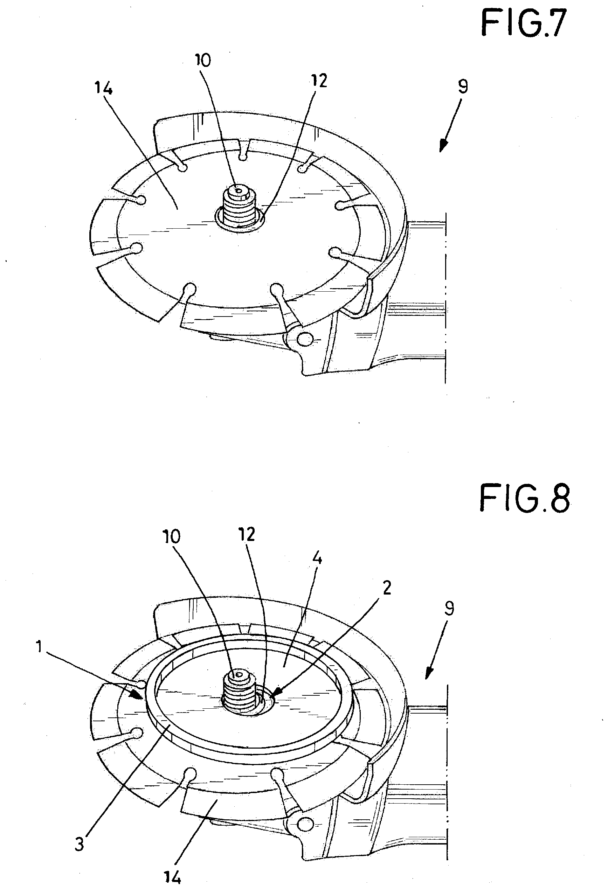

Fig. 7 zeigt den Kopfbereich des Trennschneiders 9 wie in Fig. 6, allerdings mit einer Trennscheibe 14, die auf den Zentrierteller 11 aufgelegt ist. Eine mittlere Bohrung der Trennscheibe 14 ist so bemessen, dass die Trennscheibe 14 den Zentrierkragen 12 des Zentriertellers 11 nahezu spielfrei umgibt.

In Fig. 8 ist als nächster Montageschritt der Tiefenanschlag 1 gemäß Fig. 3 auf die Trennscheibe 14 aufgelegt. Die zentrale Aussparung 2 des Tiefenanschlags 1 ermöglicht, dass sich die Achse 10 durch den Tiefenanschlag 1 hindurch erstreckt. Dabei ist in Fig. 8 ersichtlich, dass der Tiefenanschlag 1 nicht zentriert auf der Trennscheibe 14 aufliegt. Diese Zentrierung erfolgt vielmehr mit Hilfe der noch zu montierenden Spannschraube 7.

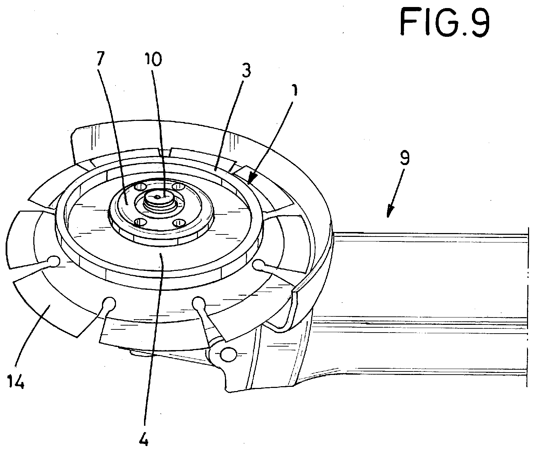

Fig. 9 zeigt die fertig gestellte Anordnung, mit welcher Kerbschnitte in Rohrkörper eingebracht werden können. Die Spannschraube 7 ist dabei auf der Achse 10 derart ausgerichtet, dass der Bund 8 sich in die Aussparung 2 des Tiefenanschlags 1 erstreckt und den Tiefenanschlag 1 auf diese Weise auf der Achse 10 zentriert.

Aus Fig. 9 ist weiterhin ersichtlich, dass der Durchmesser der Trennscheibe 14 größer ist als der Durchmesser des Anschlagrings 3. Der radiale Überstand der Trennscheibe 14 bestimmt auf diese Weise die maximale Eindringtiefe der Trennscheibe 14 in einen Rohrkörper und somit Tiefe einer Nut, die mit der in Fig. 9 dargestellten Anordnung in einer Rohrwandung erzeugt werden kann.

### Bezugszeichen:

- 1: Tiefenanschlag
- 2: Aussparung
- 3: Anschlagring
- 4: Abstandhalter
- 5: Gewinde
- 6: Einstecköffnung
- 7: Spannschraube
- 8: Bund
- 9: Trennschneider
- 10: Achse
- 11: Zentrierteller
- 12: Zentrierkragen
- 14: Trennscheibe

## Patentansprüche

1. Verwendung einer Anordnung,
▪ mit einem Trennschneider (9),
▪ einer auf dem Trennschneider (9) auswechselbar gehaltenen Trennscheibe (14),
▪ und einem Tiefenanschlag (1) für einen eine drehangetriebene, auswechselbare Trennscheibe (14) aufweisenden Trennschneider (9),
- wobei der Tiefenanschlag (1) eine mittlere Aussparung (2) aufweist,
- und einen Anschlagring (3), der kreisförmig in einem bestimmten Abstand um die Aussparung (2) verläuft,
- und einen Abstandhalter (4), der sich von der Aussparung (2) radial nach außen bis zum Anschlagring (3) erstreckt,
- wobei der Durchmesser des Anschlagrings (3) kleiner bemessen ist als der Durchmesser der Trennscheibe (14),
**dadurch gekennzeichnet, dass** die mittlere Aussparung (2) als Achsaufnahme für die Antriebsachse des Trennschneiders (9) ausgelegt ist, und dass die Anordnung zum Erzeugen von Kerbschnitten in der Wand eines mineralischen Rohrkörpers verwendet wird.

2. Verwendung einer Anordnung nach Anspruch 1,
**dadurch gekennzeichnet,**
**dass** der Abstandhalter (4) als Scheibe ausgestaltet ist.

3. Verwendung einer Anordnung nach Anspruch 2,
**dadurch gekennzeichnet,**
**dass** die Aussparung (2) als zentrische Bohrung in der Scheibe ausgestaltet ist.

4. Verwendung einer Anordnung nach einem der vorhergehenden Ansprüche,
**dadurch gekennzeichnet,**
**dass** der Anschlagring (3) eine Breite von wenigstens 3 mm aufweist.

5. Verwendung einer Anordnung nach einem der vorhergehenden Ansprüche,
**dadurch gekennzeichnet,**
**dass** der Anschlagring (3) aus Metall besteht und eine gehärtete Oberfläche aufweist.

6. Verwendung einer Anordnung nach einem der vorhergehenden Ansprüche,
**dadurch gekennzeichnet,**
**dass** der Anschlagring (3) eine gleitfreudige, reibungsarme Oberfläche aufweist.

7. Verwendung einer Anordnung nach einem der vorhergehenden Ansprüche,
**dadurch gekennzeichnet,**
**dass** der Tiefenanschlag (1) einen radial inneren Teil aufweist, in welchem die Aussparung (2) angeordnet ist, sowie einen radial äußeren Teil aufweist, welcher den Anschlagring (3) aufweist,
wobei diese beiden Teile des Tiefenanschlags (1) relativ zueinander drehbeweglich sind.

8. Verwendung einer Anordnung nach einem der vorhergehenden Ansprüche,
**dadurch gekennzeichnet,**
**dass** der Anschlagring (3) zweiteilig ausgestaltet ist, mit einem an den Abstandhalter (4) anschließenden Tragelement,
und einem Kontaktelement, welches radial außen von dem Tragelement verläuft.

9. Verwendung einer Anordnung nach Anspruch 8,
**dadurch gekennzeichnet,**
**dass** das Tragelement zumindest bereichsweise einen sich radial nach außen erweiternden Querschnitt aufweist, und dass das Kontaktelement an dem Tragelement mittels eines im Wesentlichen U-förmigen, sich radial nach innen verjüngenden Querschnitts formschlüssig gehalten ist.

10. Verwendung einer Anordnung nach Anspruch 9,
**dadurch gekennzeichnet,**
**dass** das Kontaktelement mit Spiel auf dem Tragelement gehalten ist.

11. Verwendung einer Anordnung nach Anspruch 9 oder 10,
**dadurch gekennzeichnet,**
**dass** das Kontaktelement auswechselbar auf dem Tragelement angeordnet ist.

## Claims

1. Use of an assembly,
▪ having a cut-off tool (9),
▪ and having a cut-off wheel (14) that is held exchangeably on the cut-off tool (9)
▪ and having a depth stop (1) for a cut-off tool (9) that incorporates a rotarily driven, exchangeable cut-off wheel (14),
- where the depth stop (1) has a hole (2) at its centre
- and a stop ring (3) that extends all the way around the hole (2) at a distance from the hole (2)
- and is provided with a distance piece (4) that extends radially outwards from the hole (2) to the stop ring (3),
where the diameter of the stop ring (3) is dimensioned smaller than the diameter of the cut-off wheel (14),
**characterised in that** the hole (2) at the centre is designed as a mount for the drive axle of the cut-off tool (9) and **in that** the assembly is used to make cuts into the wall of a mineral pipe body.

2. Use of an assembly in accordance with claim 1, **characterised**
**in that** the distance piece (4) is designed as a disk.

3. Use of an assembly in accordance with claim 2, **characterised**
**in that** the hole (2) is designed as a drilled hole at the centre of the disk.

4. Use of an assembly in accordance with any one of the preceding claims, **characterised**
**in that** the stop ring (3) is at least 3 mm in width.

5. Use of an assembly in accordance with any one of the preceding claims, **characterised**
**in that** the stop ring (3) is made from metal and has a hardened surface.

6. Use of an assembly in accordance with any one of the preceding claims, **characterised**
**in that** the stop ring (3) has an easily sliding, low-friction surface.

7. Use of an assembly in accordance with any one of the preceding claims, **characterised**
**in that** the depth stop (1) incorporates a radially inner part in which the hole (2) is arranged and a radially outer part that incorporates the stop ring (3),
where these two parts of the depth stop (1) are moveable relative to each other.

8. Use of an assembly in accordance with any one of the preceding claims, **characterised**
**in that** the stop ring (3) is designed in two pieces, with a bearing element that is connected to the distance piece (4) and with a contact element that extends radially outside of the bearing element.

9. Use of an assembly in accordance with claim 8, **characterised**
**in that** the bearing element has at least partly a cross-section that increases radially outwards
and **in that** the contact element is retained positively on the bearing element by means of an essentially U-shaped cross-section that decreases radially inwards.

10. Use of an assembly in accordance with claim 9, **characterised**
**in that** the contact element is retained on the bearing element with a clearance.

11. Use of an assembly in accordance with claim 9 or 10, **characterised**
**in that** the contact element is arranged exchangeably on the bearing element.

## Revendications

1. Utilisation d'un agencement,
▪ comprenant une tronçonneuse à disque (9),
▪ un disque à tronçonner (14) maintenu interchangeable sur la tronçonneuse à disque (9),
▪ et une butée de profondeur (1) pour une tronçonneuse à disque (9) présentant un disque à tronçonner (14) interchangeable entraîné en rotation,
- sachant que la butée de profondeur (1) présente un évidement (2) médian,
- et une bague butée (3) dont le tracé circulaire se trouve à une certaine distance autour de l'évidement (2),
- et un écarteur (4) qui s'étend en direction radiale vers l'extérieur, de l'évidement (2) jusqu'à la bague butée (3),
- sachant que le diamètre de la bague butée (3) est dimensionné inférieur au diamètre du disque à tronçonner (14),
**caractérisée en ce que** l'évidement (2) médian est conçu comme logement pour l'axe d'entraînement de la tronçonneuse à disque (9), et **en ce que** l'agencement est utilisé pour générer des entailles dans la paroi d'un corps tubulaire minéral.

2. Utilisation d'un agencement selon la revendication 1, **caractérisée en ce que** l'écarteur (4) est configuré en forme de rondelle.

3. Utilisation d'un agencement selon la revendication 2, **caractérisée en ce que** l'évidement (2) est configuré en alésage centré dans la rondelle.

4. Utilisation d'un agencement selon l'une des revendications précédentes, **caractérisée en ce**
**que** la bague butée (3) présente une largeur d'au moins 3 mm.

5. Utilisation d'un agencement selon l'une des revendications précédentes, **caractérisée en ce**
**que** la bague butée (3) est en métal et qu'elle présente une surface trempée.

6. Utilisation d'un agencement selon l'une des revendications précédentes, **caractérisée en ce**
**que** la bague butée (3) présente une surface à faible friction glissant facilement.

7. Utilisation d'un agencement selon l'une des revendications précédentes, **caractérisée en ce**
**que** la butée de profondeur (1) présente une partie intérieure en direction radiale, partie dans laquelle est disposé l'évidement (2), ainsi qu'une partie extérieure en direction radiale, partie qui présente la bague butée (3),
sachant que ces deux parties de la butée de profondeur (1) sont mobiles en rotation l'une relativement à l'autre.

8. Utilisation d'un agencement selon l'une des revendications précédentes, **caractérisée en ce**
**que** la bague butée (3) est configurée en deux parties, avec un élément porteur se raccordant à l'écarteur (4),
et avec un élément de contact dont le tracé s'éloigne radialement vers l'extérieur de l'élément porteur.

9. Utilisation d'un agencement selon la revendication 8, **caractérisée en ce que** l'élément porteur présente au moins localement une section qui va en s'élargissant radialement vers l'extérieur,
et **en ce que** l'élément de contact est maintenu par adhérence de formes contre l'élément porteur au moyen d'une section essentiellement en forme de U allant en s'amincissant vers l'intérieur en direction radiale.

10. Utilisation d'un agencement selon la revendication 9, **caractérisée en ce que** l'élément de contact est maintenu avec du jeu sur l'élément porteur.

11. Utilisation d'un agencement selon la revendication 9 ou 10, **caractérisée en ce**
**que** l'élément de contact est disposé interchangeable sur l'élément porteur.
